# EUROPEAN PATENT SPECIFICATION

(11) **EP 1 835 591 B1**
(45) Date of publication and mention of the grant of the patent: **14.12.2011**
(21) Application number: 07005188.3
(22) Date of filing: 13.03.2007
(51) Int. Cl.: H02G 15/18, H02G 1/14

(54) **Helical support and method for the production thereof**
Spiralförmige Halterung und Herstellungsverfahren dafür
Support hélicoïdal et procédé de fabrication correspondant

(30) Priority: 16.03.2006 DE 102006012593
(43) Date of publication of application: 19.09.2007
(73) Proprietor: Tyco Electronics Raychem GmbH, 85521 Ottobrunn (DE)
(72) Inventor: Simonsohn, Thilo, 81735 München (DE)
(74) Representative: Grünecker, Kinkeldey, Stockmair & Schwanhäusser

(56) References cited:
- EP-A- 0 399 263
- EP-A- 0 895 321
- EP-A1- 0 619 636
- WO-A-83/00779
- WO-A-99/08355
- DE-C1- 19 820 634
- JP-A- 62 282 793

## Description

The invention relates to a tubular helical support for the radial support of resiliently expanded tube material, consisting of at least an extruded body, wound to form a plurality of windings, the edges of which are connected to one another in the longitudinal direction of the helical support at least in certain regions.

Helical supports of this kind are known from the prior art and are used to keep tube material, such as, for example, insulating tubes and sleeve bodies, in an expanded state before assembly. The insulating tubes are used for electrical insulation or sealing of electrical components in power engineering, such as, for example, cable couplings or cable plug-in connectors. Since high electrical voltages of over 100 kV, for example, may be applied to these components, the insulating tubes are constructed with thick walls and made of materials with good electrical insulation properties, such as, e.g. silicone. In the assembled state, the insulating tube should match the outer contour of the component to be insulated and, similarly to a shrink-tube, enclose it without gaps as far as possible. The insulating tube is therefore resiliently expanded in diameter by approximately three to four times before assembly. This makes it easy to insert the electrical components into the insulating tube.

In order to keep the insulating tube in the expanded state until it is assembled, a support body in the form of the helical support is inserted into the insulating tube, which absorbs the restoring force caused by the resilient expansion. For assembly, the component to be insulated is positioned in the helical support which is hollow inside. The helical support then has to be removed from the insulating tube, so that the insulating tube can contract round the component to seal and insulate it.

Helical supports of the aforementioned type have proved their worth for being able to be removed manually from the insulating tube even though pressure forces of approximately 10 bar, for example, may act on them. The helical support can be gradually released by unwinding the extruded body by pulling out one free end of the extruded body through the hollow helical support. So, as the helical support is gradually released, the insulating tube contracts automatically round the component to be insulated. In this way the helical support can be manually removed from the insulating tube without further aids or devices.

Helical supports of said type must therefore on the one hand permanently withstand the pressure issuing from the expanded insulting tube and on the other hand be manually removable from the insulating tube by unwinding the extruded body. It is further important for the helical supports that sufficient construction space is available inside for inserting the electrical components, by means of a small wall thickness.

In order to ensure these properties, in the known helical supports, the edges of the windings are welded together, for example, by heating in an oven or by ultrasonic welding. Alternatively or additionally, the edges to be connected may be shaped in such a way that they lock with one another mechanically.

Known helical supports are described, for example, in US 5,087,492, EP 0 619 636 A1, WO 93/22816, WO 83/00779, DE 198 2 0634 C1, EP 0 399 263 A2, US 5,670,223 or WO 96/24977.

A problem with the known helical supports is that either the connection between the individual windings is structurally complicated and cost-intensive and/or the edges are unevenly firmly connected to one another. Uneven connection of the edges can cause the necessary release forces necessary for manual unwinding of the extruded body to fluctuate greatly, so separation of the connected edges when the helical support is released can become more difficult or manually impossible or the helix breaks.

It is therefore the object of the present invention to provide an improved helical support, which can be produced at a reasonable price, which reliably withstands pressure forces acting radially from outside and which can easily be manually removed from the insulating tube or sleeve body.

This object is achieved according to the invention in that the edges are separably connected to one another by at least a laser weld seam, which forms a weakened area of the helical support.

This solution according to the invention is structurally particularly simple and has the advantage that the laser weld seam, in contrast to known weld seams, can be produced with precisely constructed and also spatially very small dimensions. This gives rise to a particularly even connection between the windings of the helical support according to the invention.

The precisely molded-out laser weld seam according to the invention on the one hand connects the edges sufficiently firmly to one another to withstand the pressure forces of the expanded insulating tube and on the other hand can be released by pulling manually on the extruded body. During laser welding the welding energy is well metered and particularly precisely guided, so energy losses are avoided and the laser weld seam arises at the predetermined connecting point with precise dimensions.

Over-heating of the helical support in portions at a distance from the laser weld seam, as occurs, for example, with the ultrasound welding practiced to date that can lead to undesired changes in material and bonds, is ruled out with laser welding by laser light focused precisely on the target. The quality of the weld connection is considerably improved by the laser welding according to the invention compared with the known helical supports. Furthermore, the construction of the laser weld seam is simple in terms of manufacturing technology, so the helical support according to the invention can be produced at a reasonable price.

The helical support according to the invention can be further developed by various configurations, advantageous in each case per se, and independent of one another. These configurations and the advantages associated with the configurations in each case will be briefly discussed below.

The laser weld seam can further be constructed between the outer circumferential face and the inner circumferential face of the helical support. Therefore both the inner circumferential face and the outer circumferential face are substantially uninfluenced by the laser welding. In this way the outer and the inner circumferential faces are constructed, e.g. with a particularly smooth surface, so neither the pulling of the insulating tube onto the outer circumferential face, nor the insertion of the electrical components into the inside of the helical support are impeded by a changed surface.

In order to construct the laser weld seam between the inner circumferential face and the outer circumferential face of the helical support, the extruded body may have at least a melting portion which absorbs laser light in the region of the laser weld seam. At least a transparent portion, which is transparent to laser light, may be further provided. The two portions may be connected by the laser weld seam. The transparent portion may be constructed of a material which absorbs sufficiently little laser light, so the material is not melted by the laser light. On the other hand, the melting portion may be made of a material which absorbs the laser light sufficiently well, so the melting portion irradiated with laser light melts.

Because of the course of the seam of the two portions in respect to one another, it is possible to determine structurally at what depth inside the helical support wall the laser weld seam forms during welding. During welding, a laser beam penetrates the material of the transparent portion, which is transparent to laser light, without appreciable effect and the laser weld seam arises where the laser beam impinges on the melting portion. The melting portion is melted by the laser beam consisting of focused laser light. The transparent portion adjacent to the melting portion is heated and welded only indirectly by the heated melting portion, but not directly by the laser light.

In the helical support according to the invention, the transparent portion may overlap the melting portion in the radial direction at least in certain regions, so the helical support is welded by a laser welding device, which generates a laser beam impinging on the helical support from outside. Alternatively, the transparent portion may naturally also overlap the melting portion radially inside, so the laser beam may weld the helical support from inside, for example, via a mirror device.

The extruded body can be produced in just one manufacturing step, for example, by a co-extrusion or multilayer extrusion method, with the melting portion and the transparent portion. During manufacture, the melting portion can be enhanced with an absorbent material, such as, e.g. pigments, glass fibers or other filling materials, such as mica or chalk. Alternatively, the extruded body may also be produced initially from a material transparent to laser light and then provided with an absorbent layer, which absorbs laser light in the region of the melting portion. The absorbent layer may be, e.g. a layer of paint, a sprayed layer or a dip coating. The melting portion may alternatively also be constructed as strips of material applied to the extruded body.

If the helical support supports the resiliently expanded insulating tube, the helical support must withstand both pressure forces generated by the insulating tube acting radially from outside and tensile forces acting in the longitudinal direction. When the helical support is unwound, the laser weld connection is released by the pulling out of one end of the extruded body by means of a release force. In order to withstand the pressure and tensile forces generated by the insulating tube as well as possible and on the other hand to keep the release force required for unwinding as low as possible, the laser weld seam may be constructed in various forms in one helical direction of the helical support. The laser weld seam may, for example, be constructed as a substantially straight line, a wavy line or a dotted line, wherein the dotted line may also be shaped from a plurality of molded elements distanced from one another, such as, e.g. triangles or diamonds.

In order to construct holding faces on which the windings can mutually support one another, the extruded body may have mating edges, which overlap in the longitudinal direction and/or in the radial direction on adjacent windings. In order also to increase the resistance to the tensile forces issuing from the insulating tube and acting on the windings, the mating edges may engage behind one another in the longitudinal direction, thus locking the windings in the longitudinal direction.

Besides the aforementioned helical support with its advantageous configurations, the invention also relates to a method for producing a helical support for the radial support of resiliently expanded tube material, in which an extruded body is wound to form a helical support and the edges of the windings of the extruded body are connected to one another in the longitudinal direction. In order to produce a stable helical support which can be produced at a reasonable price and is easy to unwind, it is provided according to the invention that the edges are welded by laser light, wherein during welding a weakened area of the helical support is constructed, in which the edges are connected separably to one another.

In order to provide a structurally simple desired fracture point during manufacture of the helical support, at which the helical support can be separated off for unwinding, during welding a weakened region of the helical support is constructed, in which the edges of the windings are connected separably to one another. The weakened region is characterized by reduced resistance to its environment, so it forms a defined separation point at which the welded windings tear from each other when the helical support is unwound. This has the advantage that the laser weld connection is released on manual unwinding of the extruded body and no separate desired fracture point has to be provided structurally on the helical support. However, the shape of the extruded body is substantially retained after tearing. In order to support the tearing off in the weakened area, the extruded body is made of a substantially stiff material, at least in the region round the laser weld seam. Because of the stiff material a peeling effect is supported during unwinding of the helical support and deformation with tensile or shear stressing of the weld seam is prevented.

For economical production of the helical support in particularly few manufacturing steps, at least a melting portion, which is absorbent to laser light, and at least a transparent portion, which is transparent to laser light, are formed before it is wound on to the extruded body. Alternatively, the extruded body may be made initially of material transparent to laser light, onto which a ribbon material, which is absorbent to laser light, is applied before it is wound up.

So that the helical support can be made with an even surface, unchanged by the welding, on its outer circumferential face and its inner circumferential face, during welding at least a laser light beam may be conducted through the transparent portion, so the laser weld seam arises inside the helical support. The material in the transparent portion is not primarily melted by the laser light, but by the heat arising in the melting portion owing to the laser effect.

In a particularly simple configuration, the adjacent windings of the extruded body may be welded obtusely to one another, so the laser weld seam bridges the winding gap formed between adjacent windings. For this purpose, the laser light beam is directed toward at least one of the faces of the extruded body located opposite one another. In a further configuration, this can be simplified in that the laser beam or the winding gap, or both, extend diagonally to the longitudinal direction of the helical support. The winding gap may also be constructed as V-shaped, tapering away from the laser beam. The winding gap may finally have a base formed by the extruded body, at which the laser light beam is directed, so the adjacent windings are welded together at the base of the winding gap. In these embodiments, in other words in butt-welding and in welding of the winding gap, it is possible to dispense with a transparent portion, if the laser beam is directed through the winding gap.

In order to produce the helical support with particularly little time expenditure, the edges may be welded in one operating step during winding.

To support the laser weld seam, the edges may additionally be glued together or mechanically locked, so the stability of the helical support is increased. To support the laser light beam, ultrasound may also be introduced into the extruded body.

As well as the helical support and the method for the production thereof, the invention additionally relates to a device for producing a helical support according to one of the aforementioned embodiments. The production device comprises a holding device, to which an extruded body can be fastened and wound to form a helical support, and at least a welding device by which the edges of the extruded body can be welded, at least in certain regions, the holding device and the welding device being movable relative to one another. In order to be able to produce the helical support simply and at a reasonable price, it is provided according to the invention that the welding device is constructed as a laser welding device, adapted so that during welding a weakened area of the helical support is constructed, in which the edges are connected separately to one another.

Finally, the invention also relates to a tube arrangement with a tube material, such as, for example, an insulating tube, which is expanded resiliently radially outwards, and with a helical support arranged in the tube material, which supports the expanded tube material radially inwards. In order to provide a reasonably priced tube arrangement in which the helical support can easily be removed from the tube material, it is provided according to the invention that the helical support is constructed according to one of the above-described embodiments.

The invention is explained below as an example with reference to the attached drawings. The different features may be combined independently of one another, as has already been demonstrated above in the individual advantageous configurations.

Fig. 1 shows a schematic illustration of an embodiment of a helical support according to the invention by way of example.

Fig. 2 shows a schematic sectional illustration of a detail A from Fig. 1.

Fig. 3 shows a schematic sectional illustration of an alternative embodiment of detail A from Fig. 1.

Fig. 4 shows a schematic illustration of a detail B from Fig. 1.

Fig. 5 shows an alternative embodiment of detail B from Fig. 1.

Fig. 6 shows an alternative embodiment of detail B from Fig. 1.

Fig. 7 shows a schematic illustration of a device according to the invention for producing the helical support according to the invention from Fig. 1.

Fig. 8 shows a schematic illustration of a tube arrangement according to the invention with the helical support from Fig. 1.

Fig. 9 shows a schematic sectional illustration of the extruded body of Fig. 2.

Fig. 10 shows a schematic sectional illustration of a further alternative embodiment of the extruded body.

Fig. 11 shows a schematic sectional illustration of a further alternative configuration of the extruded body.

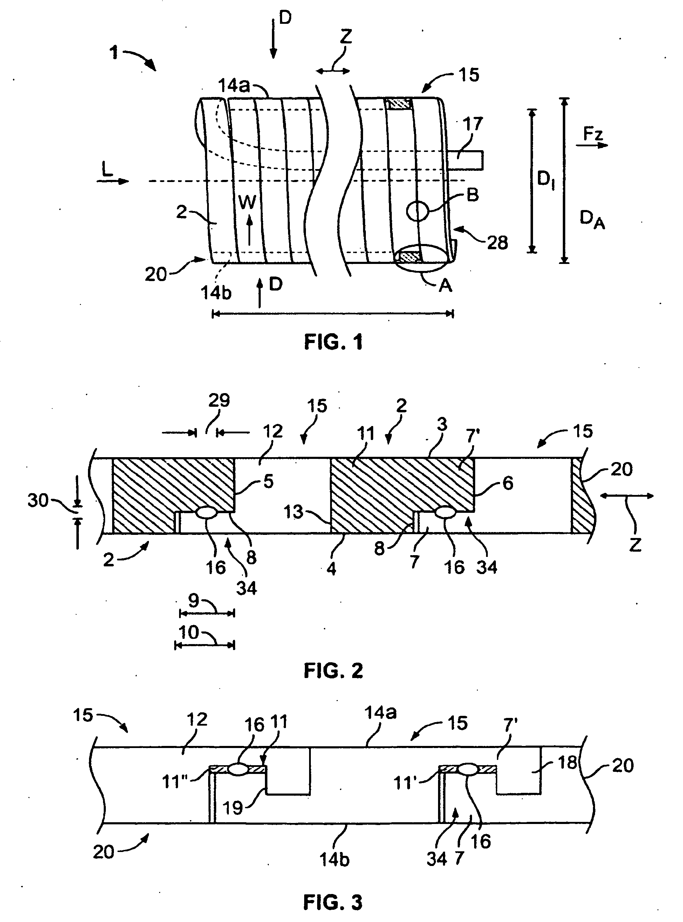

Firstly, the general construction of a helical support 1 according to the invention is described with reference to Figs. 1 and 2 and the therein illustrated example embodiment.

The helical support 1 is formed by an extruded body 2 wound with a plurality of windings 15 in a winding direction W.

The extruded body 2 is constructed as a substantially continuous ribbon body, which has been produced by an extrusion method, for example. In this way, in theory, the helical support 1 can be produced with an infinite length. In practice, the helical support 1 is generally approximately 30 to 50 cm long. In cross-section, the extruded body 2 in the embodiment illustrated as an example in Figs. 1, 2 and 9 is substantially rectangular with parallel upper and lower edges 3, 4 and shorter lateral edges 5, 6. The lateral edges 5, 6 mate with one another. A rectangular projection 7 is constructed on a side of the edge 6 and a rectangular recess 8 is constructed on a side of the edge 5. The projection 7 and the recess 8 are formed to mate with one another. A recess 8' is formed on the side of the edge 6 and a projection 7' is formed on the side of edge 5. The projections 7, 7' and the recesses 8, 8' are shaped out at right angles in each case.

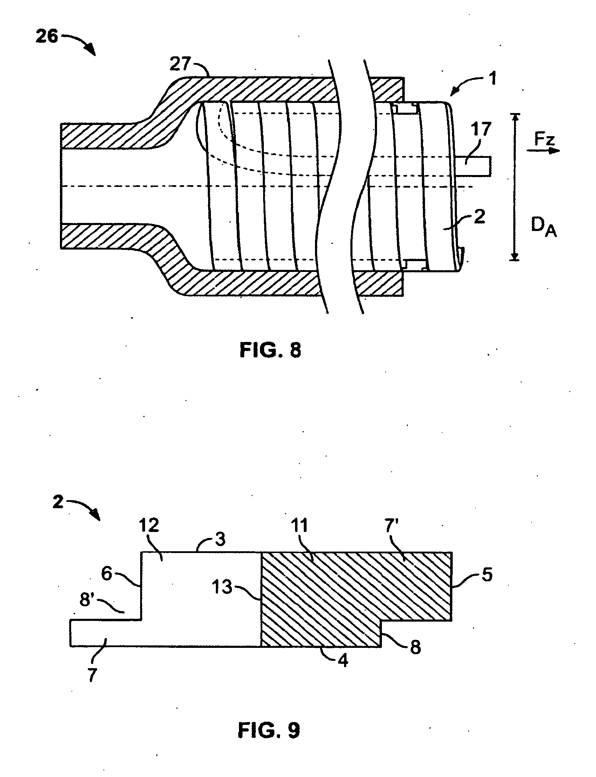

The extruded body 2 further has a melting portion 11 which absorbs laser light and a transparent portion 12 which is transparent to laser light. In the embodiment illustrated in Figs. 2 and 9, a separating edge 13 between the melting and transparent portions 11, 12 extends substantially perpendicular to the upper and lower edges 3, 4. In the cross-sectional illustration in Figs. 2 and 9, the edge 5 with the recess 8 is constructed in the melting portion 11 and the edge 6 with the projection 7 is constructed in the transparent portion 12. To make it easier to recognize, the melting portion 11 is illustrated as a shaded region in Figs. 2 and 9.

The transparent portion 12 is constructed of a material which does not heat up when irradiated with laser light and which conducts the laser light. On the other hand, the melting portion 11 is made of a material which heats until it melts when irradiated with laser light. The melting portion 11 may be enhanced with an absorbent material, such as, for example, pigments, glass fibers, mica or chalk.

The extruded body 2, as illustrated in Fig. 1, is wound up to form the tubular helical support 1 with the plurality of windings 15. The upper and lower edges 3, 4 of the extruded body 2 form an outer circumferential face 14a and an inner circumferential face 14b of the helical support 1. The helical support 1 has an outer diameter DA and an inner diameter D1. The helical support 1 is wound up in such a way that the edges 5, 6 touch on adjacent windings 15. The adjacent windings 15 of the helical support 1 in Fig. 1 overlap one another, because the projections 7 of the windings 15 engage in the recesses 8 of the adjacent windings 15 in each case. In the embodiment in Figs. 1 and 2, the melting portion 11 of the winding 15 is surrounded in the region of the projection 8 in the radial direction outside by the transparent portion 12 of the next winding 15.

Constructed between the edges 4, 5 of the adjacent windings 15 in each case is a laser weld seam 16, which connects the edges 5 and 6 by firm bonding. In the embodiment illustrated as an example in Fig. 2, the laser weld seam 16 connects in particular in each case the recess 8 of the winding 15 to the projection 7 of the adjacent winding 15. The laser weld seam 16 is constructed with a weld seam width 29 and a weld seam depth 30. The laser weld seam 16 further forms a weakened region 34 in the helical support 1, at which the edges 5, 6 are connected separably to one another. In the weakened region 34, in other words at the laser weld seam 16, the finished helical support 1 has lower resistance than at other areas.

The helical support 1 in Fig. 1 forms a tubular body with substantially circular cross-section, which extends in a longitudinal direction L. Naturally, the helical support 1 can also be constructed with alternative cross-sections, such as, e.g. oval or square.

As the extruded body 2 can be produced in any lengths, for example, by extrusion, helical supports 1 of any length can be produced from the extruded body 2. The extruded body 2 in Fig. 1 is made of a flexible, rigid material, e.g. a plastics material. This means that the wound-up helical support 1 can withstand pressure forces D acting inwards in a radial direction. The pressure resistance of the helical support 1 is reinforced by the laser-welded windings 15, which additionally overlap with the projections 7 and recesses 8 in the radial direction and support one another. In the embodiments of Figs. 1 and 9, the extruded body 2 is made of a solid material. It is alternatively also possible to construct the extruded body 2 in cross-section as a hollow body, in order to reduce the amount of material and the weight of the helical support 1.

In order to release or dismantle the helical support 1, the wound-up, welded extruded body 2 can be unwound or unwrapped. For this purpose the extruded body 2 is pulled at one free end 17 with a release force FZ, so the welded edges 5, 6 are separated in the weakened region 34 and released from one another. The weakened region 34 in which the resistance of the helical support 1 is reduced forms a desired fracture point or separation point. As illustrated in Fig. 1 and described in greater detail below with reference to Fig. 8, for separating, the free end 17 is pulled out in the longitudinal direction L through an interior 28 of the tubular helical support 1. As the laser weld seam 16 is made with very precisely predetermined and particularly even dimensions 29, 30, the helical support 1 according to the invention reliably withstands the previously known pressure forces D and the tensile forces acting in the pulling direction Z. Advantageously the helical support 1 is not over-dimensioned, because of the exact construction of the laser weld seam 16, and the weld connection can be released with the predetermined release force FZ. The release force FZ must be at least large enough for the reduced resistance to be overcome in the respective weakened region 34 and for the edges 5, 6 to separate. By laser welding, the resistance in the weakened region 34 can be very precisely predetermined, so it is large enough to be able to withstand pressure and tensile forces acting from outside, but small enough to be able to separate the edges 5, 6 manually.

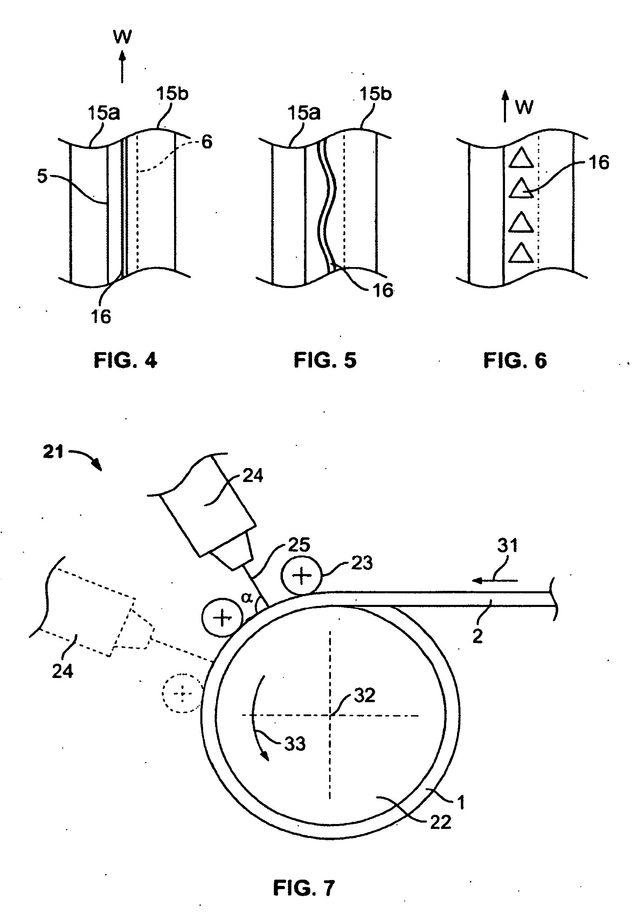

The laser weld seam 16 can be constructed in different forms, as described below with reference to Figs. 4 to 6, wherein each show an alternative configuration of a detail B from Fig. 1.

Fig. 4 shows two adjacent windings 15a, 15b of the helical support 1 according to the invention in a horizontal direction. The winding 15b here overlaps the winding 15a, as in the illustration in Fig. 2. In the embodiment in Fig. 4, the laser weld seam 16 is constructed as a line extending substantially straight in the winding direction W and substantially parallel to the edges 5, 6. Alternatively, the windings 15a, 15b may of course be connected by a plurality of parallel-extending laser weld seams 16. In the embodiment in Fig. 5, the windings 15a, 15b are connected to one another by two laser weld seams 16 extending substantially in a wave shape. As illustrated in Fig. 6, the laser weld seams 16 may connect the edges 5, 6 only at points or in portions, in other words form a spot seam. The laser weld seam 16 is constructed in Fig. 6, for example, as a broken line or of a plurality of triangles. The laser weld seam 16 may alternatively be shaped in other molded elements, such as, e.g. diamonds or parallelograms. Because of the laser weld seams 16 shaped in triangles of the embodiment in Fig. 6, the edges 5, 6 can be particularly easily separated by the release force FZ, because the edges 5, 6 are connected less firmly at a tip of the triangle, owing to the smaller welding face.

Fig. 3 shows an alternative embodiment of the extruded body 2, which is wound to form the helical support 1 according to the invention from Fig. 1. In Fig. 3, similarly to in Fig. 2, only detail A of Fig. 1 is illustrated. By contrast to the embodiment illustrated in Fig. 2, the projections 7 and 7' are constructed as bent at right angles/crimped in each case and have in each case a holding face 18 aligned transversely to the longitudinal direction or an opposite holding face 19. When the helical support 1 is wound up, the projections 7, 7' engage in one another and the holding face 18 is supported on the opposite holding face 19, with tensile stressing in the pulling direction Z. Adjacent windings 15 of the helical support 1 are locked in the pulling direction Z by the crimped projections 7, 7' engaging in one another.

Unlike in the embodiment example in Fig. 2, the entire extruded body 2 is made of a laser-transparent plastics material, which forms the transparent portion 12, in the embodiment in Fig. 3. In the region of the melting portion 11, the helical support 1 has an absorbent layer 11' with an absorbent material, which is applied to the extruded body 2. The absorbent layer 11' may be applied by a paint, a spray or a dip coating or by co-extrusion. Alternatively, the melting portion 11 may also be constructed as a ribbon material 11" applied to the extruded body 2, which is placed between the adjacent windings 15 of the helical support 1 during winding. In the embodiment in Fig. 3 the two alternatives, the absorbent layer 11' or the ribbon material 11" are illustrated for visual reasons.

In both the embodiment in Fig. 2 and in that in Fig. 3, the laser weld seam 16 is inside a wall 20 of the helical support 1, i.e. between the outer circumferential face 14a and the inner circumferential face 14b. In order to be able to construct the laser weld seam 16 inside the wall 20 of the helical support 1, the laser weld seam 16 must be optically accessible to a laser beam from outside. This optical accessibility is guaranteed in the embodiment of Figs. 2 and 3 by the transparent portions 12.

Fig. 7 shows an embodiment of a production device 21 according to the invention for a helical support 1 according to the invention as an example. The production device 21 has one or more laser welding devices 24 and a holding device 22 for the helical support 1 with a plurality of pressure rollers 23. In Fig. 7, the holding device 22 is constructed as a mandrel.

To produce the helical support 1, first the extruded body 2 is clamped into the substantially cylindrical holding device 22, e.g. by means of a clamping device. The extruded body 2 may be produced by the extrusion method, for example, and then fed to the production device 21 in a feed direction 31 in the freshly extruded state. The holding device 22 subsequently winds up the extruded body 2 in such a way that the individual windings 15, as illustrated in Fig. 1, touch one another and overlap radially. For winding up, the holding device 22 turns about its longitudinal axis 32 in a direction of rotation 33. The helical support 1 rests on the outer circumferential face of the holding device 22. A plurality of pressure rollers 23 press the extruded body 2 against the outer circumferential face of the holding device 22, so the helical support 1 is formed with a constant diameter DA, D1. The edges 5, 6 of the extruded body 2 are welded by a laser beam 25, generated by the statically arranged laser welding device 24. In order, for example, to generate a plurality of the laser weld seams 16 in the helical support 1, the production device 21 may have one or more further laser welding devices 24, as illustrated in Fig. 7 by broken lines.

In the example production device 21 in Fig. 7 the laser welding devices 24 are arranged at a radial distance from the holding device 22 and the laser beam 25 consisting of focused laser light impinges on the helical support 1 from outside. Alternatively, the laser welding device 24 may be arranged inside a hollow holding device or the laser beam 25 may be diverted via a mirror device (not illustrated) and weld the helical support 1 radially from inside.

The laser beam 25 is incident on the extruded body 2 of the helical support 1 at an angle α. In the example production device 21 in Fig. 7, the angle α is constructed as substantially rectangular. The width 29 of the laser weld seam 16 may be influenced by the angle α. Otherwise the weld seam width 29 depends on the diameter of the laser beam 25. The weld seam depth 30 is substantially determined by the intensity of the laser beam 25 and the feed rate by the rotational speed of the holding device 22.

Fig. 8 shows an example embodiment of a tube arrangement 26 according to the invention in which resiliently expanded tube material, such as, for example, an insulating tube 27, is held in the expanded state by the helical support 1 according to the invention. The insulating tube 27 is made of a resilient, electrically insulating material, for example silicon, and is used to electrically insulate electrical components. For insulation, the insulating tube 27 should enclose the components to be insulated like a shrink tube. In order to be able to position the insulating tube 27 easily round the components to be insulated, it is kept in an expanded state by the helical support 1 according to the invention. If the insulating tube arrangement 26 according to the invention is arranged above the component, the helical support 1 can be released by pulling on the free end 17 of the extruded body 2. As soon as the helical support 1 is removed, the expanded insulating tube 26 relaxes and contracts, as illustrated in Fig.8. The above-described embodiments can be further modified.

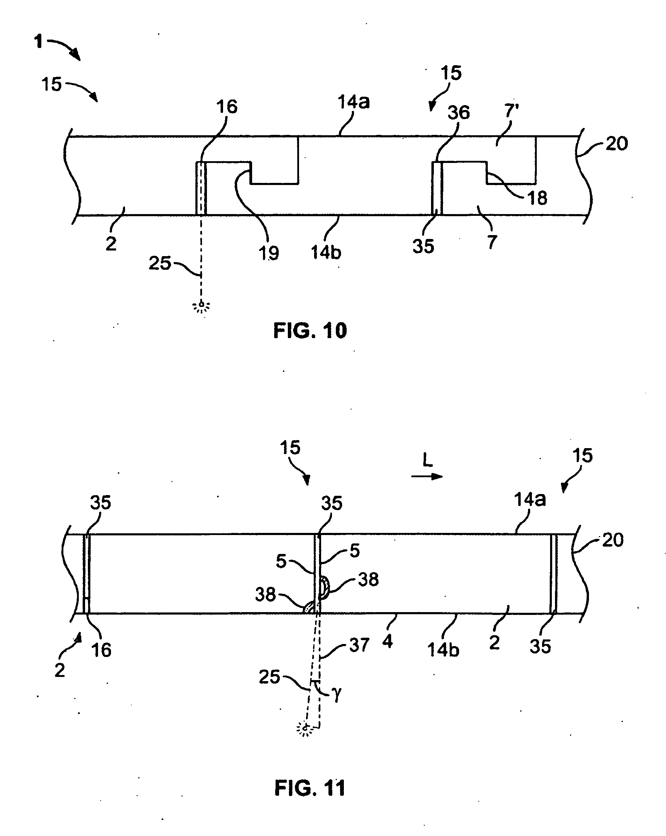

In a simplified embodiment, as illustrated in Fig. 10, the welding can take place through the winding gap 35 between two adjacent windings 15. The schematic sectional illustration of Fig. 10 shows a cross-section of the helical support 1 during production. On the left, the weld seam 16 is just being made with the laser beam 25 and on the right no weld seam 16 has yet been made. Only the differences from the above embodiments will be discussed below for the sake of brevity, their reference numerals being adopted in Fig. 10.

The laser beam 25 in this embodiment is parallel to the walls of the winding gap 35 directed at its base 36, so the laser weld seam 16 forms on the base of the winding gap 35.

This configuration has the advantage that there is no need for the transparent portion 12. As with the above embodiments, however, the point at which the laser beam 25 impinges must be made of a laser-absorbent material. As with the above embodiments, this can be done by appropriate coating in the region of the base 36. In a simplified configuration, however, the entire extruded body 2 can be made of a laser-absorbent material.

Finally, in a particularly simple embodiment the projections 7, 7' of the extruded body 2 can be dispensed with. This embodiment is schematically illustrated in Fig. 11.

In this configuration the winding gap 35 reaches through the entire thickness of the extruded body 2, in other words from the outer circumferential face 14a to the inner circumferential face 14b. The adjacent windings 15 are butt-welded together.

In order to achieve welding of adjacent windings 15, the laser beam 25 is inclined against the longitudinal direction 37 of the winding gap 35 about an angle γ. This means that the winding gap 35 impinges on one of the edges of the extruded body 2 opposite one another and melts it on. As illustrated in Fig. 11, the inclination γ of the laser beam 25 can also be set in such a way that the laser beam 25 impinges on both adjacent windings 15 and there in at least a melting zone 38 leads to melting of material on the opposite edges 5. The material then shrinks and forms the weld seam 16, as shown in Fig. 11 in the far left illustration of the winding gap 35. The weld seam 16 bridges the winding gap 35.

The winding gap 35 does not, as shown in Fig. 11, have to extend transversely to the longitudinal direction L of the winding gap 35, but can also be inclined against the longitudinal direction L. It is essential only that the laser beam 25 is inclined about an angle γ. It is possible to dispense with the inclination of the laser beam 25 if the winding gap 35 has a V-shaped cross-section and the two opposite edges 5 of the extruded body 2 touch one another in the windings 15 at the base 36 of the winding gap 35.

As with the embodiments of Fig. 10, hereto it is possible for only the region on which the laser beam 25 impinges to be made of a laser-absorbent material or else the entire extruded body 2.

In all cases ultrasound can also be used for welding or pre-heating the extruded body 2 in addition to the laser light.

## Claims

1. Tubular helical support (1) for the radial support of elastically expanded tube material (26), consisting of at least one extruded body (2) wound to form several windings (15), the edges (5, 6) of which are connected to one another in the longitudinal direction (L) of the helical support (1) at least in portions, **characterized in that** the edges (5, 6) are connected to one another by at least one laser weld seam (16), wherein
the laser weld seam (16) forms a weakened area (34) of the helical support (1) at which the edges (5, 6) are separably connected to one another.

2. Helical support (1) according to claim 1, **characterized in that** the laser weld seam (16) is constructed between the inner circumferential face (14b) and the outer circumferential face (14a) of the helical support (1).

3. Helical support (1) according to any one of the preceding claims, **characterized in that** the helical support (1) has at least one melting portion (11) made of a material which absorbs laser light at least in the area:of the laser weld seam (16).

4. Helical support (1) according to any one of the preceding claims, **characterized in that** the helical support (1) has at least one transparent portion (12) made of a material which is transparent to laser light.

5. Helical support (1) according to claim 4, **characterized in that** the transparent portion (12) overlaps the melting portion (11) in the radial direction at least in portions.

6. Helical support (1) according to any one of claims 3 to 5, **characterized in that** the melting portion (11) of one winding (15) is welded to the transparent portion (12) of the adjacent winding (15).

7. Helical support (1) according to any one of claims 3 to 6, **characterized in that** the extruded body (2) is provided in the area of the melting portion (11) with an absorbent layer (11', 11") which absorbs laser light.

8. Helical support (1) according to any one of claims 3 to 7, **characterized in that** the melting portion (11) is constructed as a ribbon material (11") applied to the extruded body (2), as a layer of lacquer consisting of a painted, dipped or sprayed lacquer or as a co-extruded layer.

9. y6. Helical support (1) according to any one of claims 3 to 8, **characterized in that** the helical support (1) is enhanced with an absorbent material in the area of the melting portion (11). 9

10. Helical support (1) according to claim 9, **characterized in that** the absorbent material contains glass fibers, mineral filling materials or colored pigments.

11. Helical support (1) according to any one of the preceding claims, **characterized in that** the laser weld seam (16) is constructed in a helical direction (W) as a substantially straight line, a substantially wavy line or as a substantially broken line.

12. Helical support (1) according to any one of the preceding claims, **characterized in that** the extruded body (2) has mating edges (5, 6) which overlap on adjacent windings (15) in the longitudinal direction (L) and/or in the radial direction at least in portions.

13. Helical support (1) according to claim 12, **characterized in that** the edges (5, 6) engage behind one another in the longitudinal direction (L) and the windings (15) are locked in the longitudinal direction (L).

14. Helical support (1) according to any one of the preceding claims, **characterized in that** the laser weld seam (16) bridges a winding gap (35) between two adjacent windings (15).

15. Method for producing a helical support (1) for the radial support of elastically expanded tube material (26), in which an extruded body (2) is wound to form the helical support (1) and the edges (5, 6) of the extruded body (2) are connected to one another in the longitudinal direction (L) of adjacent windings (15) of the helical support (1), **characterized in that** the edges (5, 6) are welded by laser light, wherein
during welding a weakened area (34) of the helical support (1) is constructed, in which the edges (5, 6) are connected separably to one another.

16. Method according to claim 15, **characterized in that** before winding on to the extruded body (2) at least one melting portion (11) which absorbs laser light and at least one portion (12) which is transparent to laser light are formed.

17. Method according to any one of claims 15 or 16, **characterized in that** during welding at least one laser light beam (25) is conducted through the transparent portion (12).

18. Method according to any one of claims 15 to 17, **characterized in that** edges (5, 6) are welded during winding onto the extruded body (2).

19. Method according to any one of claims 15 to 18, **characterized in that** ultrasound is introduced into the extruded body (2) to support the laser light beam (25).

20. Method according to any one of claims 15 to 19, **characterized in that** the edges are glued or mechanically locked to support the laser weld seam.

21. Method according to any one of claims 15 to 20, **characterized in that** the laser beam (25) is directed in a winding gap (35) formed between two adjacent windings (15) and generates a laser weld seam (16) which bridges the winding gap (35).

22. Device for producing a helical support (1) according to any one of claims 1 to 14, with a holding device (22), to which an extruded body (2) can be fastened and wound to form a helical support (1), and with at least one welding device (24), by which the edges (5, 6) of the extruded body (2) can be welded at least in portions, wherein the holding device (22) and the welding device (24) can be moved relative to one another, **characterized in that** the welding device (24) is a laser welding device (24) adapted so that during welding a weakened area (34) of the helical support (1) is constructed, in which the edges (5, 6) are connected separably to one another.

23. Tube device (26) with a tube material (27) which is elastically expanded radially outwards and with a helical support (1), arranged in the tube material (26), which supports the expanded tube material (26) radially inwards, **characterized in that** the helical support (1) comprises the features of any one of claims 1 to 14.

## Patentansprüche

1. Rohrförmige, spiralförmige Halterung (1) für das radiale Stützen von elastisch expandiertem Schlauchmaterial (26), das aus mindestens einem extrudierten Körper (2) besteht, der gewickelt ist, um mehrere Wicklungen (15) zu bilden, deren Ränder (5, 6) miteinander in der Längsrichtung (L) der spiralförmigen Halterung (1) mindestens in Abschnitten verbunden sind, **dadurch gekennzeichnet, dass** die Ränder (5, 6) miteinander mittels mindestens einer Laserschweißnaht (16) verbunden sind, wobei
die Laserschweißnaht (16) einen schwachen Bereich (34) der spiralförmigen Halterung (1) bildet, in dem die Ränder (5, 6) trennbar miteinander verbunden sind.

2. Spiralförmige Halterung (1) nach Anspruch 1, **dadurch gekennzeichnet, dass** die Laserschweißnaht (16) zwischen der inneren Umfangsfläche (14b) und der äußeren Umfangsfläche (14a) der spiralförmigen Halterung (1) ausgebildet ist.

3. Spiralförmige Halterung (1) nach einem der vorhergehenden Ansprüche, **dadurch gekennzeichnet, dass** die spiralförmige Halterung (1) mindestens einen Schmelzabschnitt (11) aufweist, der aus einem Material besteht, das Laserlicht mindestens im Bereich der Laserschweißnaht (16) absorbiert.

4. Spiralförmige Halterung (1) nach einem der vorhergehenden Ansprüche, **dadurch gekennzeichnet, dass** die spiralförmige Halterung (1) mindestens einen transparenten Abschnitt (12) aufweist, der aus einem Material besteht, das für Laserlicht transparent ist.

5. Spiralförmige Halterung (1) nach Anspruch 4, **dadurch gekennzeichnet, dass** der transparente Abschnitt (12) den Schmelzabschnitt (11) in der radialen Richtung mindestens in Abschnitten überdeckt.

6. Spiralförmige Halterung (1) nach einem der Ansprüche 3 bis 5, **dadurch gekennzeichnet, dass** der Schmelzabschnitt (11) der einen Wicklung (15) auf den transparenten Abschnitt (12) der benachbarten Wicklung (15) geschweißt wird.

7. Spiralförmige Halterung (1) nach einem der Ansprüche 3 bis 6, **dadurch gekennzeichnet, dass** der extrudierte Körper (2) im Bereich des Schmelzabschnittes (11) mit einer absorbierenden Schicht (11', 11") versehen ist, die Laserlicht absorbiert.

8. Spiralförmige Halterung (1) nach einem der Ansprüche 3 bis 7, **dadurch gekennzeichnet, dass** der Schmelzabschnitt (11) als ein Streifenmaterial (11"), das auf den extrudierten Körper (2) aufgebracht wird, als eine Lackschicht, die aus einem gestrichenen, getauchten oder aufgespritzten Lack besteht, oder als eine koextrudierte Schicht ausgebildet ist.

9. Spiralförmige Halterung (1) nach einem der Ansprüche 3 bis 8, **dadurch gekennzeichnet, dass** die spiralförmige Halterung (1) mit einem absorbierenden Material im Bereich des Schmelzabschnittes (11) verbessert wird.

10. Spiralförmige Halterung (1) nach Anspruch 9, **dadurch gekennzeichnet, dass** das absorbierende Material Glasfasern, mineralische Füllstoffe oder Farbpigmente enthält.

11. Spiralförmige Halterung (1) nach einem der vorhergehenden Ansprüche, **dadurch gekennzeichnet, dass** die Laserschweißnaht (16) in einer spiralförmigen Richtung (W) als eine im Wesentlichen gerade Linie, eine im Wesentlichen wellige Linie oder als eine im Wesentlichen gestrichelte Linie ausgebildet ist.

12. Spiralförmige Halterung (1) nach einem der vorhergehenden Ansprüche, **dadurch gekennzeichnet, dass** der extrudierte Körper (2) passende Ränder (5, 6) aufweist, die sich auf benachbarten Wicklungen (15) in der Längsrichtung (L) und/oder in der radialen Richtung mindestens in Abschnitten überdecken.

13. Spiralförmige Halterung (1) nach Anspruch 12, **dadurch gekennzeichnet, dass** sich die Ränder (5, 6) hintereinander in der Längsrichtung (L) berühren, und dass die Wicklungen (15) in der Längsrichtung (L) gesichert sind.

14. Spiralförmige Halterung (1) nach einem der vorhergehenden Ansprüche, **dadurch gekennzeichnet, dass** die Laserschweißnaht (16) einen Wicklungsspalt (35) zwischen zwei benachbarten Wicklungen (15) überbrückt.

15. Verfahren zur Herstellung einer spiralförmigen Halterung (1) für das radiale Stützen von elastisch expandiertem Schlauchmaterial (26), wobei ein extrudierter Körper (2) gewickelt ist, um die spiralförmige Halterung (1) zu bilden, und wobei die Ränder (5, 6) des extrudierten Körpers (2) miteinander in der Längsrichtung (L) der benachbarten Wicklungen (15) der spiralförmigen Halterung (1) verbunden sind, **dadurch gekennzeichnet, dass** die Ränder (5, 6) mittels Laserlicht verschweißt werden, wobei
während des Schweißens ein schwacher Bereich (34) der spiralförmigen Halterung (1) ausgebildet wird, in dem die Ränder (5, 6) trennbar miteinander verbunden sind.

16. Verfahren nach Anspruch 15, **dadurch gekennzeichnet, dass** vor dem Aufwickeln des extrudierten Körpers (2) mindestens ein Schmelzabschnitt (11), der Laserlicht absorbiert, und mindestens ein Abschnitt (12), der für Laserlicht transparent ist, gebildet werden.

17. Verfahren nach einem der Ansprüche 15 oder 16, **dadurch gekennzeichnet, dass** während des Schweißens mindestens ein Laserlichtstrahl (25) durch den transparenten Abschnitt (12) geleitet wird.

18. Verfahren nach einem der Ansprüche 15 bis 17, **dadurch gekennzeichnet, dass** die Ränder (5, 6) während des Aufwickelns des extrudierten Körpers (2) geschweißt werden.

19. Verfahren nach einem der Ansprüche 15 bis 18, **dadurch gekennzeichnet, dass** Ultraschall in den extrudierten Körper (2) eingeführt wird, um den Laserlichtstrahl (25) zu unterstützen.

20. Verfahren nach einem der Ansprüche 15 bis 19, **dadurch gekennzeichnet, dass** die Ränder geleimt oder mechanisch gesichert werden, um die Laserschweißnaht zu unterstützen.

21. Verfahren nach einem der Ansprüche 15 bis 20, **dadurch gekennzeichnet, dass** der Laserstrahl (25) in einen Wicklungsspalt (35) gelenkt wird, der zwischen zwei benachbarten Wicklungen (15) gebildet wird, und eine Laserschweißnaht (16) erzeugt, die den Wicklungsspalt (35) überbrückt.

22. Vorrichtung für die Herstellung einer spiralförmigen Halterung (1) nach einem der Ansprüche 1 bis 14 mit einer Haltevorrichtung (22), auf der ein extrudierter Körper (2) angebracht und gewickelt werden kann, um eine spiralförmige Halterung (1) zu bilden, und mit mindestens einer Schweißvorrichtung (24), mittels der die Ränder (5, 6) des extrudierten Körpers (2) mindestens in Abschnitten geschweißt werden können, wobei die Haltevorrichtung (22) und die Schweißvorrichtung (24) relativ zueinander bewegt werden können, **dadurch gekennzeichnet, dass** die Schweißvorrichtung (24) eine Laserschweißvorrichtung (24) ist, die so ausgebildet ist, dass während des Schweißens ein schwacher Bereich (34) der spiralförmigen Halterung (1) ausgebildet wird, in dem die Ränder (5, 6) trennbar miteinander verbunden werden.

23. Schlauchvorrichtung (26) mit einem Schlauchmaterial (27), das radial nach außen elastisch expandiert wird, und mit einer spiralförmigen Halterung (1), die im Schlauchmaterial (26) angeordnet ist, die das expandierte Schlauchmaterial (26) radial nach innen stützt, **dadurch gekennzeichnet, dass** die spiralförmige Halterung (1) die charakteristischen Merkmale nach einem der Ansprüche 1 bis 14 aufweist.

## Revendications

1. Support hélicoïdal tubulaire (1) pour assurer le support radial de matériau tubulaire à dilatation élastique (26), comprenant au moins un corps extrudé (2) enroulé pour former plusieurs enroulements (15), dont les bords (5, 6) sont connectés l'un à l'autre dans la direction longitudinale (L) du support hélicoïdal (1), au moins dans certaines parties, **caractérisé en ce que** les bords (5, 6) sont connectés l'un à l'autre par au moins un cordon de soudure au laser (16), dans lequel
le cordon de soudure au laser (16) forme une zone affaiblie (34) du support hélicoïdal (1), au niveau de laquelle les bords (5, 6) sont connectés séparément l'un à l'autre.

2. Support hélicoïdal (1) selon la revendication 1, **caractérisé en ce que** le cordon de soudure au laser (16) est formé entre la face circonférentielle interne (14b) et la face circonférentielle externe (14a) du support hélicoïdal (1).

3. Support hélicoïdal (1) selon l'une quelconque des revendications précédentes, **caractérisé en ce que** le support hélicoïdal (1) comporte au moins une partie à fusion (11) composée d'un matériau absorbant la lumière laser, au moins dans la zone du cordon de soudure au laser (16).

4. Support hélicoïdal (1) selon l'une quelconque des revendications précédentes, **caractérisé en ce que** le support hélicoïdal (1) comporte au moins une partie transparente (12) composée d'un matériau transparent à la lumière laser.

5. Support hélicoïdal (1) selon la revendication 4, **caractérisé en ce que** la partie transparente (12) chevauche la partie à fusion (11) dans la direction radiale, au moins dans certaines parties.

6. Support hélicoïdal (1) selon l'une quelconque des revendications 3 à 5, **caractérisé en ce que** la partie à fusion (11) d'un enroulement (15) est soudée sur la partie transparente (12) de l'enroulement adjacent (15).

7. Support hélicoïdal (1) selon l'une quelconque des revendications 3 à 6, **caractérisé en ce que** le corps extrudé (2) est pourvu dans la région de la partie à fusion (11) d'une couche absorbante (11', 11"), absorbant la lumière laser.

8. Support hélicoïdal (1) selon l'une quelconque des revendications 3 à 7, **caractérisé en ce que** la partie à fusion (11) est construite sous forme d'un matériau en ruban (11") appliqué sur le corps extrudé (2), sous forme d'une couche de vernis-laque, comprenant un vernis-laque peint, immergé ou pulvérisé ou sous forme d'une couche à co-extrusion.

9. Support hélicoïdal (1) selon l'une quelconque des revendications 3 à 8, **caractérisé en ce que** le support hélicoïdal (1) est renforcé par un matériau absorbant dans la zone de la partie à fusion (11).

10. Support hélicoïdal (1) selon la revendication 9, **caractérisé en ce que** le matériau absorbant contient des fibres de verre, des matériaux de charge minéraux ou des pigments colorés.

11. Support hélicoïdal (1) selon l'une quelconque des revendications précédentes, **caractérisé en ce que** le cordon de soudure au laser (16) est formé dans une direction hélicoïdale (W), sous forme d'une ligne pratiquement droite, d'une ligne pratiquement ondulée ou d'une ligne pratiquement brisée.

12. Support hélicoïdal (1) selon l'une quelconque des revendications précédentes, **caractérisé en ce que** le corps extrudé (2) comporte des bords d'accouplement (5, 6), se chevauchant sur des enroulements adjacents (15) dans la direction longitudinale (L) et/ou dans la direction radiale, au moins dans certaines parties.

13. Support hélicoïdal (1) selon la revendication 12, **caractérisé en ce que** les bords (5, 6) s'engagent l'un derrière l'autre dans la direction longitudinale (L), les enroulements (15) étant verrouillés dans la direction longitudinale (L).

14. Support hélicoïdal (1) selon l'une quelconque des revendications précédentes, **caractérisé en ce que** le cordon de soudure au laser (16) s'étend sur un espace d'enroulement (35) entre deux enroulements adjacents (15).

15. Procédé de production d'un support hélicoïdal (1) pour le support radial de matériau tubulaire à dilatation élastique (26), dans lequel un corps extrudé (2) est enroulé pour former le support hélicoïdal (1), les bords (5, 6) du corps extrudé (2) étant connectés l'un à l'autre dans la direction longitudinale (L) d'enroulements adjacents (15) du support hélicoïdal (1), **caractérisé en ce que** les bords (5, 6) sont soudés par la lumière laser, dans lequel
une zone affaiblie (34) du support hélicoïdal (1) est formée lors du soudage, les bords de cette zone (5, 6) étant connectés séparément l'un à l'autre.

16. Procédé selon la revendication 15, **caractérisé en ce qu'**avant l'enroulement du corps extrudé (2), au moins une partie à fusion (11) absorbant la lumière laser, et au moins une partie (12) transparente à la lumière laser sont formées.

17. Procédé selon l'une quelconque des revendications 15 ou 16, **caractérisé en ce qu'**au cours du soudage, au moins un faisceau de lumière laser (25) est guidé à travers la partie transparente (12).

18. Procédé selon l'une quelconque des revendications 15 à 17, **caractérisé en ce que** les bords (5, 6) sont soudés au cours de l'enroulement sur le corps extrudé (2).

19. Procédé selon l'une quelconque des revendications 15 à 18, **caractérisé en ce que** des ultrasons sont introduits dans le corps extrudé (2) pour supporter le faisceau de lumière laser (25).

20. Procédé selon l'une quelconque des revendications 16 à 19, **caractérisé en ce que** les bords sont collés ou verrouillés de manière mécanique pour supporter le cordon de soudure au laser.

21. Procédé selon l'une quelconque des revendications 15 à 20, **caractérisé en ce que** le faisceau laser (25) est dirigé dans un espace d'enroulement (35) formé entre deux enroulements adjacents (15), et produit un cordon de soudure au laser (16) s'étendant sur l'espace d'enroulement (35).

22. Dispositif de production d'un support hélicoïdal (1) selon l'une quelconque des revendications 1 à 14, comportant un dispositif de retenue (22), sur lequel un corps extrudé (2) peut être fixé et enroulé pour former un support hélicoïdal, et comportant au moins un dispositif de soudage (24), permettant de souder les bords (5, 6) du corps extrudé (2), au moins dans certaines parties, le dispositif de retenue (22) et le dispositif de soudage (24) pouvant être déplacés l'un par rapport à l'autre, **caractérisé en ce que** le dispositif de soudage (24) est un dispositif de soudage au laser (24), adapté de sorte qu'au cours du soudage, une zone affaiblie (34) du support hélicoïdal (1) est formée, dont les bords (5, 6) sont connectés séparément l'un à l'autre.

23. Dispositif tubulaire (26) comportant un matériau tubulaire (27), dilaté de manière élastique radialement vers l'extérieur et comportant un support hélicoïdal (1), agencé dans le matériau tubulaire (26), supportant le matériau tubulaire dilaté (26) radialement vers l'intérieur, **caractérisé en ce que** le support hélicoïdal (1) présente les caractéristiques selon l'une quelconque des revendications 1 à 14.
